(19)

Europäisches
Patentamt
European
Patent Office
Office européen
des brevets

(11) **EP 2 196 901 A1**

(12) **EUROPEAN PATENT APPLICATION**

(43) Date of publication:
**16.06.2010 Bulletin 2010/24**

(51) Int Cl.:
***G06F 9/44*** *(2006.01)*

(21) Application number: **09010453.0**

(22) Date of filing: **13.08.2009**

<table>
<tr>
<td>

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **11.12.2008 US 332663**

(71) Applicant: **SAP AG**
**69190 Walldorf (DE)**

(72) Inventors:
• **Kramer, Wolfram**
**69190 Walldorf (DE)**

</td>
<td>

• **Krueger, Uwe**
**69190 Walldorf (DE)**
• **Gauges, Michael**
**69190 Walldorf (DE)**
• **Schröder, Martin**
**69190 Walldorf (DE)**

(74) Representative: **Müller-Boré & Partner**
**Patentanwälte**
**Grafinger Strasse 2**
**81671 München (DE)**

</td>
</tr>
</table>

(54) **Systems and methods for tracking software stands in a software production landscape**

(57)      According to some embodiments, a first container, representing a first uniquely addressable physical location in a software production landscape, may be associated with a first series of stand snippets related to a software product. Similarly, a second container, representing a second uniquely addressable physical location in the software production landscape, may be associated with a second series of stand snippets related to the software product. Information about a sequence of stand snippets may then be automatically provided to a user, wherein the sequence may include stand snippets from both the first and second containers.

FIG. 1

EP 2 196 901 A1

**Description**

FIELD

Some embodiments of the present invention may relate to a software production landscape. In particular, some embodiments may comprise systems and methods for tracking software stands in a software production landscape.

BACKGROUND

The development of a software product may involve the creation of a number of different versions of the product and portions of the product. For example, developers may periodically modify and update portions of the source code of the software product to improve functionality and/or to correct errors in the product as they are discovered. In some cases, different developers will work on portions of the same software product in parallel.

A Software Configuration Management (SCM) tool may help maintain, track, and distribute different versions of the source code. For example, one developer might use the SCM tool to ensure that he or she is accessing the latest version of a source code routine before making any changes.

Although an SCM tool may help track different versions of source code, in some cases this information may not be sufficient to allow for the development of a software product in a complex software production landscape. For example different versions of source code might be used to create different executable versions, which in turn might be distributed to testing environments and/or production systems. As a result, it can be difficult to track different versions of an application in a software development and production process.

Approaches that may improve the ability to maintain, track, and distribute different versions throughout a software production landscape could, therefore, be desirable. Moreover, it may advantageous to provide one or more tools that facilitate these abilities in an efficient and convenient manner.

BRIEF DESCRIPTION OF THE DRAWINGS

FIG. 1 is a block diagram of a software production landscape according to some embodiments.
FIG. 2 illustrates a time diagram of a software production landscape according to some embodiments.
FIG. 3 is a flow diagram of a method pursuant to some embodiments of the present invention.
FIG. 4 illustrates two containers with stand snippets according to some embodiments of the present invention.
FIG. 5 is a flow diagram of a method pursuant to some embodiments of the present invention.
FIG. 6 illustrates a linear process history of stand snippets in a software production landscape according to some embodiments.
FIG. 7 illustrates an indirect process history of stand snippets in a software production landscape according to some embodiments.
FIG. 8 is a block diagram of a process log tool architecture according to some embodiments.
FIG. 9 illustrates a process log tool data model according to some embodiments.
FIG. 10 illustrates a graphical user interface that may be associated with a process log tool according to some embodiments.

DETAILED DESCRIPTION

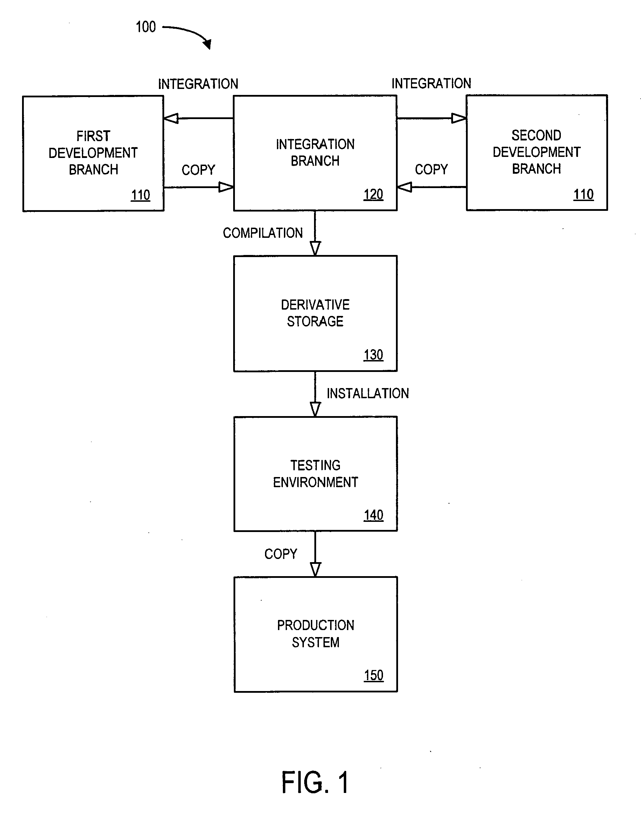

To alleviate problems inherent in the prior art, some embodiments of the present invention introduce systems, methods, computer program code, and means for tracking software stands in a software production landscape. For example, FIG. 1 is a block diagram of a software production landscape 100 according to some embodiments. The landscape 100 may include one or more development branches 110 that provide code associated with a software application to an integration branch 120. The development branches 110 may also retrieve copies of code associated with the software application from the integration branch 120.

The integration branch 120 may coordinate the exchange and integration of source code portions and compile code received from the development branches 110. The integration branch 120 may then provide a compiled version of the software application to a derivative storage unit 130

The derivative storage unit 130 may store different versions of a software application may further provide an installation copy of the software application to a testing environment 140. The testing environment 140 may, for example, be used to look for problems with the software application. The testing environment 140 may further provide a copy of the software application to one or more remote production systems 150. A production system 150 may, for example, be associated with a client or customer enterprise system that executes the software application in a business environment.

Note that elements described herein as communicating with one another may be directly or indirectly capable of communicating over any number of different systems for transferring data, including but not limited to shared memory communication, a local area network, a wide area network, a telephone network, a cellular network, a fiber-optic network, a satellite network, an infrared network, a radio frequency network, and any other type of network that may be used to transmit information between devices. Moreover, communication between remote systems may proceed over any one or more transmission protocols that are or become known, such as Asynchronous Transfer Mode (ATM), Internet Protocol (IP), Hypertext Transfer Protocol (HTTP), and/or Wireless Application Protocol (WAP). Although a single integration branch 120 is illustrated in FIG. 1, note that any number of integration branches 120, as well as the other elements described herein, may be provided.

Note also that some or all of the devices illustrated in FIG. 1 (as well as the other systems described herein) may use processor-executable program code read from one or more of a computer-readable medium, such as a floppy disk, a CD-ROM, a DVD-ROM, a magnetic tape, and a signal encoding the process, and then stored in a compressed, uncompiled and/or encrypted format. Note that embodiments are not limited to any specific combination of hardware and software.

In addition to the elements illustrated in FIG. 1, a software development project may be associated with various other technical infrastructures, such as a version control system and/or a build server. The larger the project, the more people involved in the development (e.g., developers, quality managers, and/or build administrators), and the more distributed ways in which the software is developed (e.g., development at different places around the world), may increase the complexity of the associated landscape 100.

The complexity of the landscape may grow in different dimensions. For example, the number of source code versions that may need to be maintained may increase. Moreover, over a period of time the number of software versions being maintained may increase. In addition, as more developers are involved, sources versions of the software may be partitioned and parallel evolution of several stands of the software (e.g., branches) may be integrated. An SCM tool may offer limited solutions based on such a branching mechanism.

Also note that some processes may not evolve directly from sources but may instead operate on different version of the product (e.g., that were initially base on a source version). For example, a compilation of sources may create a derivate version based on the source version. This derivate version may be stored (e.g., on a file system) to be accessible for sequel process steps through a network. Those process steps may take the derivates from the file system (e.g., and install them in a testing environment 140). Depending on the size and complexity of the software development project, there might be a number of different testing environments 140 hosting different stands of the software.

In addition to examples associated with testing environments 140, there may exist a multitude of other infrastructure elements which fit the characteristic pattern of physically hosting a version of the software in any given shape. By way of examples only, such elements might be associated with:

- Storage of derivates after a compilation of sources (e.g., available from a branch in a version control system);
- Installed versions on a testing environment;
- Replicated versions of the most current compilation results (such as may exist when distributed development occurs in different locations); and
- A "final" version on a web server ready to be downloaded by customers.

Various infrastructure elements in complex software development landscapes (including the branches within a version control system and physically accessible storages that contain software stands outside of the version control system - but that may be based on source code stands within the version control system) may each contain a current version of the software (shaped as sources, derivates, or a mixed of these forms) whose ability to be uniquely identified may be important to the operation of the entire development process.

With respect to the tracking of software from the process perspective, note that an ability to unique identify a version may mean more than the attachment of a unique identifier. A software development organization may be enabled, for example, to track the processes or more exactly, the "history" that a software version has experienced. The notion history may be associated in some respects with a corresponding notion in the context of source version control systems: that is versions of a software product may interconnected by successor relations. Here, however, not only the versions within a typical version control system may taken into account, but instead all existing versions within the whole production infrastructure may be accounted for.

Some SCM tools may manage a software product as a structural versioned entity, and every change on in the evolution of the product may create a new version of the product. This version can then be mapped to new versions of atomic entities (e.g., files of folders). Such approaches, however, have several disadvantages. For example, the tracking of history is restricted to source versions. That is, versions that are not managed by the version control system, in particular derivate versions, are not taken into account. This may limit the usefulness of such solutions because the focus of interest from a process point of view lies less on single versions of the product and more on the process history that spans over many subsequent snapshots. The notion of a software "stand" as used herein may be associated with, for example, a sequence of technical snapshots that were a target of a sequence of process steps and/or process history.

Also note that software development processes are not necessarily linear. As a consequence, there may be many opinions of what the history of a stand could be. To illustrate this, consider the production infrastructure of a small application that is developed in two development branches in parallel. The developments may then be gathered in an integration branch (e.g., by integrating current snapshot of the integration branch into one of the development branches at defined points of time). After that, the integrated snapshot may be copied from the development branch into the integration branch (which is sometimes referred to as a "rebase/pull" or "merge down/copy up" in software development). The compilation process may write its results (e.g., the derivates) to a derivate storage element from which the application may installed into a testing environment. After successful testing, the tested stand may pushed onto a web server where the application can be downloaded by customers.

As described herein, these infrastructure elements may be described by "containers" with transformations occurring in between the containers. For example, the elements of the block diagram of FIG. 1 may be associated with containers (and the transitions between those elements may be considered transformations). Note, however, that FIG. 1 may be thought of as only showing the dimension of space. That means, it represents the static setup of the infrastructure landscape 100 without making any statement about temporal behavior. The transformation channels are instantiated as transformations at certain times which leads to the creation of a new snapshot in the target container.

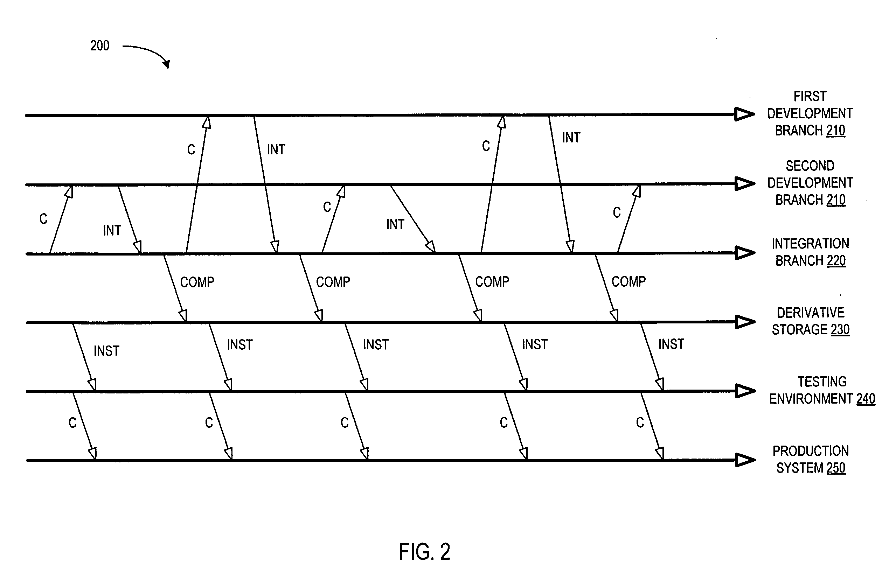

In contrast, FIG. 2 illustrates a time diagram 200 of the same software production landscape according to some embodiments. In this case, transformations are drawn as arrows (labeled "c" for copies from an integration branch 220 or testing environment 240, "int" for integration to the integration branch, "inst" for installation from a derivative storage 230 to a testing environment 240, and "comp" for compilation from the integration branch 220 to the derivative storage 230). Thus, it can be seen how developments may be transformed step-by-step through the transformation cycles associated with a first development branch 210 and a second development branch 210 through the landscape.

Depending on the role a person plays within this landscape (e.g., developer, quality manager, or operator) different points of view may be of interest with respect to the temporal history. By way of examples only:

- A purpose of the integration branch 220 may be to provide the last merged version of the software product that is developed in a distributed manner in different parallel development branches 210 which are isolated from each other. These may be sequentially copied into the integration branch 220. Which branch was associated with a copy into the integration branch may a question regarding the linear history of current stand.
- With respect to another interpretation of the history, consider a web server that provides a readily compiled and installable version of the application to be downloaded by a customer. How this version was created (e.g., which process steps the corresponding stand has passed through - and why) may need to be reproducible after the face. The involved containers in such a case might include: the file system of the web server, the final qualifying system (which, depending on the character of the application, might also be a file system), the storage of the compilation process, the integration branch, and/or multiple development branches. In this case, the linear history may not be of interest, but instead someone may like to know the indirect history. Such a history might lead transitively, starting from a current snapshot on the file system of the web server via several other containers (e.g., a testing environment and a derivate storage element) and transformations (e.g., testing qualifications and compilations), that operate on the containers, and ultimately back to the development branches.
- A developer who is working in a first development branch may require a function that is implemented by a developer working in a second development branch. Since the exchange of sources between the two development branches may be realized through an integration branch, the first developer can use the function in first development branch only after a certain time after it is complete. The developer may therefore be interested in the information indicating the last change that was created in second development branch (and has become visible in first development branch after copy and integration).

Thus, the notion of "stand" as described herein may be associated with a sequence of snapshots together with a corresponding process history that can be interpreted differently depending on the situation. Therefore, it may be helpful to consider an embodiment that may both (i) have a unique interpretation and (ii) is able to deduce a process history for different interpretations of a stand. Such an embodiment may be associated with, for example, a "container."

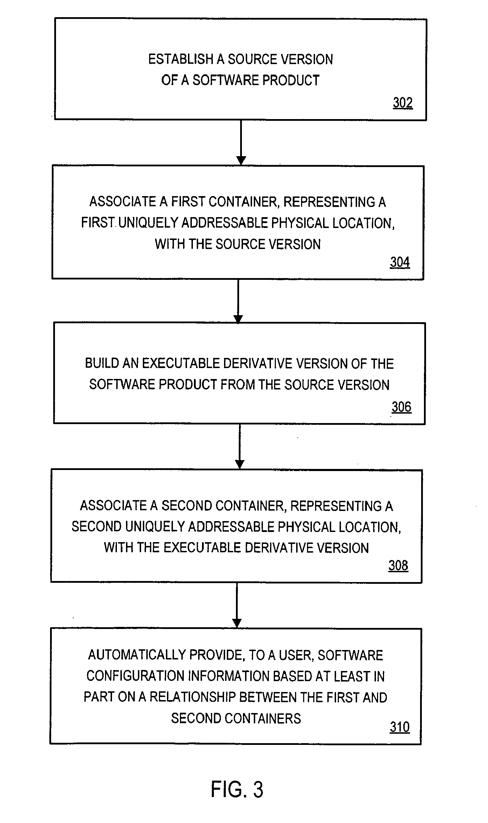

For example, FIG. 3 is a flow diagram of a method pursuant to some embodiments of the present invention. The flow charts described herein do not necessarily imply a fixed order to the actions, and embodiments may be performed in any order that is practicable. Note that any of the methods described herein may be performed by hardware, software (including microcode), firmware, or any combination of these approaches. For example, a storage medium may store thereon instructions that when executed by a machine result in performance according to any of the embodiments described herein.

At 302, a source version of a software product may be established. For example, an integration branch of a software product landscape may establish a source version of the software product. At 304, a first "container," representing a first uniquely addressable physical location in the software production landscape, may be associated with the source version.

As used herein, the term "container" may refer to, for example, a branch in a SCM tool and/or any other location where software versions or snapshots may be found. Such a container may represent, for example, a generalization of software configuration management branches or streams. Moreover, containers may provide a unified description of an infrastructure covering the notion of branches typically used in software configuration management tools as well as infrastructure elements that are outside the control of typical SCM tool (e.g., including build result locations, replication locations, and/or test systems).

At 306, an executable derivative version of the software product may be built from the source version. A second container, representing a second uniquely addressable physical location in the software production landscape, may then be associated with the executable derivative version at 308.

At 310, software configuration information may be provided to a user based at least in part on a relationship between the first and second containers at a given point in time.

Note that typical SCM tools track different versions of source code (or source code portions). However, the management of source code alone might be insufficient to effectively produce a complex software product. For example, there may be many intermediate steps between the source code and the final product that is executed by a customer (and different steps might be spread across the infrastructure of the production landscape).

In such an environment, the development of the product may start with the source code, and then include the compilation of sources (build) and packaging of compilation results into archives or libraries or - more in a more general respect - "derivates" that can be executed on a given platform.

Some prominent examples include a pure operating system or an application server. Within the development process, such a platform may be used mainly for testing purposes. Typically, however, governance of the SCM tool ends before the generation step begins. Unique identification of a software snapshot provided by a SCM tool is therefore restricted only to sources. That is, an adequate standardized solution for derivates (e.g., located in a generation directory or on a runtime environment) that enables their unique identification is missing. Operators of software development processes may therefore be forced to establish their own solutions for identifying derivates. In some cases, metadata, generated into the derivates, can provide information about the generation process and/or the underlying source snapshot. In the latter case, depending on the access methodologies of the SCM tool, a time stamp or a sequence number identifying the source snapshot, a label or a Uniform Resource Locator (URL) may be used.

However, the annotation of derivates may only be a workaround for determining which source code the entities found on the derivate folder or on the test system came from. Note that a derivate snapshot may have its own identity, but is on the other side correlated to the source snapshot from which it was originally generated. This correlation may provide the cleanest information about the identity of derivates (e.g., it may be assumed that properties of derivates are determined by the sources).

In relatively small software projects, the problem of identifying derivate snapshots on generation directories or in runtime environments might be manageable. But in larger projects, where parallel development plays a role, the situation may become impractical. For example, the increasing number of snapshots that do not consist of sources (and therefore are not under SCM tool control) may result in confusion.

According to some embodiments, the principles of SCM tools based on source control are applied to derivates. For that, a unified model that abstracts over the description of sources and derivates may be helpful. A prerequisite for such a model may be a concept of formalizing the physical storage of snapshots, not affected by the fact whether they consist of sources or of derivates.

As used herein, an "entity" may refer to a software object that possesses an identity that is independent of time. An entity may have arbitrarily many content-bearing instances called "versions" of the entity. Note that a version might have an identity that is also independent of time. Once created, a version might be un-modifiable. Examples of entities include files, directories, and row entries in a database. A version of an entity may reflect the content of the entity under consideration of access context and time. Note that this definition is similar to the notion of version as it is applied to SCM tools. But the idea of a version as described herein goes further since it does not differentiate between sources and generation results hence derivates.

Examined on the level of versions, a generation step may be described as follows: it uses a set of input versions for creating versions of other entities. Therefore, it realizes an n:m relationship between input versions and generated output versions. A version that is a target of at least one generation relationship is referred to herein as a derivate version. A version that is not target of any generation relationship is referred to as a source version. To be a source may be a property of the version alone (not of the entity). Also note that an entity may contain both source and derivate versions. Moreover, it may be the case that a source version has a derivate version as successor and vice versa.

The identity of a source version may be defined by a SCM tool. The identity of a derivate version is determined by the identities of all source versions that are reached by -- perhaps transitive -- backtracking of generation relationships starting from the derivate version.

As used herein, a "version set" is a set of versions with the property that any entity is represented by at most one version:

$$S = \{V_{\alpha 1}(E_1),...,V_{\alpha n}(E_n)\} \, with \, \forall i \neq j : E_i \neq E_j$$

where the $E_k$ run through all entities that participate in the software product and $V_{\alpha m}(E_m)$ is the version of $E_m$ identified by index $\alpha m$. It may be avoided within a version set that different versions of the same entity conflict with each other.

An inherent task of a SCM tool may be to provide configurations. Thus, an SCM tool may be able to inform about version sets of a software product and to provide version sets (as already described, that ability is in general restricted to sources). Starting from these considerations, the terminology of a container can now be further described according to some embodiments.

A container may represent a uniquely addressable physical location that provides access to versions. The whole of the versions that are accessible in a container at a given point of time may form a version set. To illustrate the concept, consider the following examples:

- A directory within an SCM tool which hosts source snapshots of a software product may represent a container. The versions that are directly accessible are the current versions.
- A label defined in an SCM tool may represent a container. Via the label, source versions of a snapshot may be accessible that needs not to be the current source snapshot of the software product.
- A directory within an SCM tool together with a time stamp may be equivalent to a label. The container offers access to the source versions of the software product that were current at the given time stamp.
- Two branches within an SCM tool that are used for the same software product for maintaining two releases or to enable development in two parallel development lines, are two different containers.
- The centrally accessible directory into which the build server places generation results (based on a given source snapshot) may represent a container. That is, it contains derivate versions but may also contain source versions (most commonly those which the derivate versions were generated from).
- A directory into which the already generated derivate versions are copied in a post-build step for the purpose of providing developers in a distributed landscape with the newest build results. This directory may also represent a container.
- A runtime environment where the generated derivates are executed may represent a container.

As used herein, a version set that is accessible via a container is in the sequel called snapshot. Thus, containers may represent physical storages of snapshots. Moreover, a snapshot can be interpreted as version of an aggregated (logical) entity as follows: whenever a version that is accessible via a container is replaced by another version of the same entity, a new snapshot is created and therefore a new version of the aggregated entity. Besides the direct accessible current snapshot, the container may also contain all predecessor snapshots. The accessibility to snapshots that are not current by using a specified time stamp may depend on the explicit implementation of the container.

A snapshot is able to contain source versions, derivate versions, or both types of versions. According to some embodiments, a snapshot may embrace the whole software product (the aggregated entity whose version can be interpreted as the snapshot represents a state of the whole product). Note that a container in principle could host a version set that does not cover the whole product (but instead only a component out of it).

Note that by way of example, an entity might represent the whole of all sources of the software product or the whole of derivates of the software product as a representation of a completely generated, ready to run product. As other examples, an entity might represent any possible intermediate states between those two extremes. Although these different types of entities may represent the same product (each in a different manner), they have different identities (that is, a derivate may be differentiated strictly from its underlying source).

Typically, central production processes operate on snapshots of the whole source base of a software product, and a central generation process uses a source snapshot of the whole product to produce a derivate snapshot of the whole product. This aspect can be formalized in the following way: a "transformation" is an operation that uses read access to a snapshot in an input container for producing a new current snapshot in an output container. Note the possibility that a source container and an output container may be identical. If, after finishing the transformation the input snapshot is identical to the output snapshot, the transformation is called a "transport."

One example of a transformation is a central build process. In this case, the input container is the directory of sources of the software product hosted by the SCM tool, and the output container is the central file system directory for the derivates. Another example of a transformation is a "local C make." A special feature in this case is the fact that the compilation results normally are generated into the source directory. Thus, the input container and output container are identical. The newly created snapshot contains both the source versions of the input snapshot and additionally the derivate versions. Still another example of a transformation is a local build done by in a development environment. Depending on the development environment, this example may also apply to technologies other than C/C++ (e.g., to Java development with Eclipse).

As another example of a transformation, consider the creation of a label in an SCM tool. In this case, no new versions are created and therefore no new snapshot is generated. An already existing snapshot is marked by the labelthus it becomes the current snapshot in the container defined by the label. This is one example of a "transport" transformation.

Yet another example of a transformation might be the integration of a source snapshot from one branch in an SCM tool into another branch without occurrence of conflicts. Formally, this may be considered a transport because the contents of the input snapshot and the output snapshot are identical. From a technical point of view, it may depend on the implementation of the SCM tool (that is, whether the identity of versions is preserved or new versions are created in the output branch). Other examples of transformations may include integration of a source snapshot from one branch in an SCM tool into another branch with occurrence of conflicts and a manual resolving of conflicts and an installation of executable derivates on a runtime environment (when the input container is the central derivate directory and the output container is the runtime instance).

Thus, a container may represent a kind of generalization of the notion commonly known as a "branch" in the context of SCM systems. According to some embodiments, all physical storages of stands may be modeled as containers.

To help avoid ambiguity the parts of a stand restricted to one container may be referred to as "stand snippets." From those, depending on the interpretation, the correct stand and associated history may be assembled. In some cases, the meaning of the phrase "stand snippet" may be defined by a set of requirements.

A stand snippet may enclose a complete software product as sources and/or derivates and be accessible through a container. The process point of view may require a stand snippet to have a well-defined history. For example, one stand snippet could be qualified in a testing environment, and another stand snippet could be hosted by a container within the version control system (which is evolved independently from other stand snippets). As a consequence, a stand snippet might be attached to exactly one container.

Moreover, a container may host a single active stand snippet at any point of time. Thus, every stand snippet may have a well-defined time interval in which the stand snippet is active in the container to which the stand snippet is attached. Note that the active time interval might be located completely in the past or may span until the present time. As a result, such an interval might always be associated with a starting time and, optionally, an end time. As a consequence, every container may host a seamless sequence of active time intervals belonging to a sequence of stand snippets. Except of the first stand snippet within a container, every stand snippet might possess exactly one direct predecessor stand snippet whose end time is equal to the start time of the first one. To uniquely define the assignment of interval borders, it might be assumed that the start time always belongs to the time interval, but the end time does not. The time interval defining the stand snippet may therefore represent a sequence of technical snapshots that are hosted by the container in question.

A stand snippet might emerge, for example, either intentionally or as consequence of a transformation. An intentional emergence might mean, for example, that the active stand snippet in a container is closed and a new one is created as successor. The container is in this case not the target of a transformation. This makes sense because after finishing a task in a versioned container during evolution the resulting snapshot may be marked (e.g., by a label or baseline) and the evolution due to accomplishing the sequel task should be separated semantically from the evolution due to the task before. In the context of stand interpretation, this intention leads to the creation of a new stand.

The more frequent case may be the emerging of a stand snippet as consequence of a transformation. As used herein, a "transformation" may be able to operate both within the version control system or between two arbitrary containers. In a target container, a new stand snippet may need to be created, and the new snapshot created by this action may differ significantly from its predecessor snapshot (e.g., it might not be a result of a single atomic change due to evolution). The stand snippet created by the transformation therefore may not only possess a direct predecessor within the same container, but also the stand snippet in the other container that serves as starting container for the transformation as an indirect predecessor.

Note that the concept of a stand snippet might be abstracted from technical snapshots. That is, a stand snippet may act like a semantic bracket around a sequence of technical snapshots within a container. According to some embodiments, it may be ensured that the corresponding relations between technical snapshots can be recovered from the relations between stand snippets. This may imply the necessity of attaching a reference time to the indirect predecessor relation between stand snippets (which marks the technical snapshot within the starting container for the transformation).

Such considerations lead to a definition of a "stand snippet" as an object assigned to a given container with some or all of the following properties:

- Every stand snippet may possess a time interval of activity. The time interval may begins at a start time that belongs to the interval. The time interval might, for example, stay until the present time or end at an end time that does not belong to the interval.
- At any point of time, there might be exactly one stand snippet active in a given container.
- Every stand snippet might have one (or no) indirect predecessor relationship to a stand snippet in another container. An indirect predecessor relationship may comprise a three-part element consisting of: (i) a successor stand snippet, (ii) a predecessor stand snippet, and (iii) a reference time that accomplishes the following two goals:

  - the reference time may lie within the activity time interval of the indirect successor stand snippet, and
  - the reference time might not be later than the starting time of the successor stand snippet.

- No changes may be allowed on an existing stand snippet except the setting of the end date (if is was not set before).

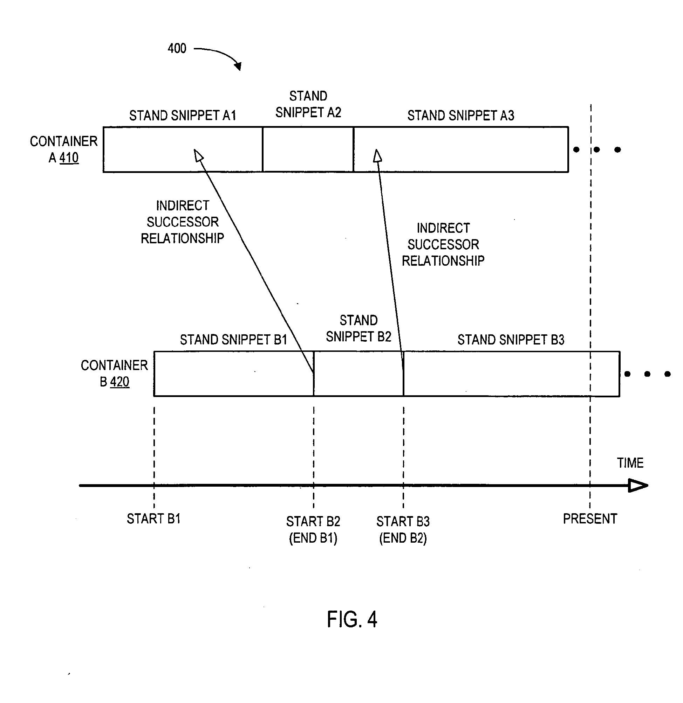

By way of example, consider FIG. 4 which illustrates two containers (container A 410 and container B 42) with stand snippets according to some embodiments of the present invention. In container A 410, four stand snippets were created in succession without indirect predecessors. In container B 420, stand snippets B2 and B3 each an indirect predecessor (namely snippets A1 and A3 respectively as illustrated by arrows in FIG. 4). That means that there was a transformation transforming a snapshot in A1 into that snapshot in B that defined and initiated the start of B2. The corresponding is true for the transformation that created B3. The reference time of B2 or B3 respectively is shown as the end of the arrow in the indirect predecessor stand snippet A1 or A3 respectively. The arrow symbolizes the indirect predecessor relation and runs in reverse direction of the underlying transformation.

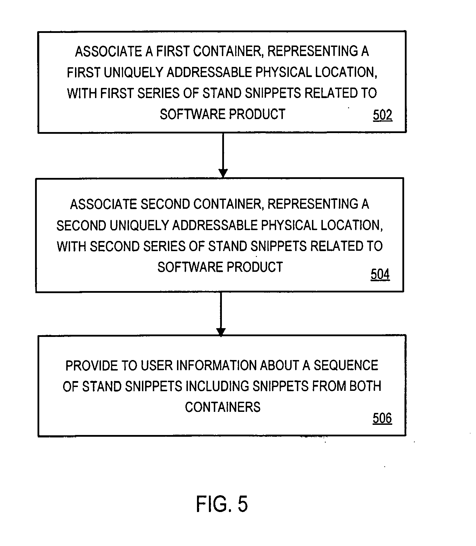

FIG. 5 is a flow diagram of a method pursuant to some embodiments of the present invention. At 502, a first container, representing a first uniquely addressable physical location in the software production landscape, is associated with a first series of stand snippets related to a software product. At 504, a second container, representing a second uniquely addressable physical location in the software production landscape, is associated with a second series of stand snippets related to the software product.

Note that each stand snippet may be associated with a time interval, which for a current stand snippet includes a start time and for a non-current stand snippet includes a start time and an end time.

According to some embodiments, the first container is associated with a source version of the software product and the second container is associated with an executable derivative version of the software product built from the source version. Moreover, the first container may comprise a directory within a software configuration management tool that hosts snapshots of the software product.

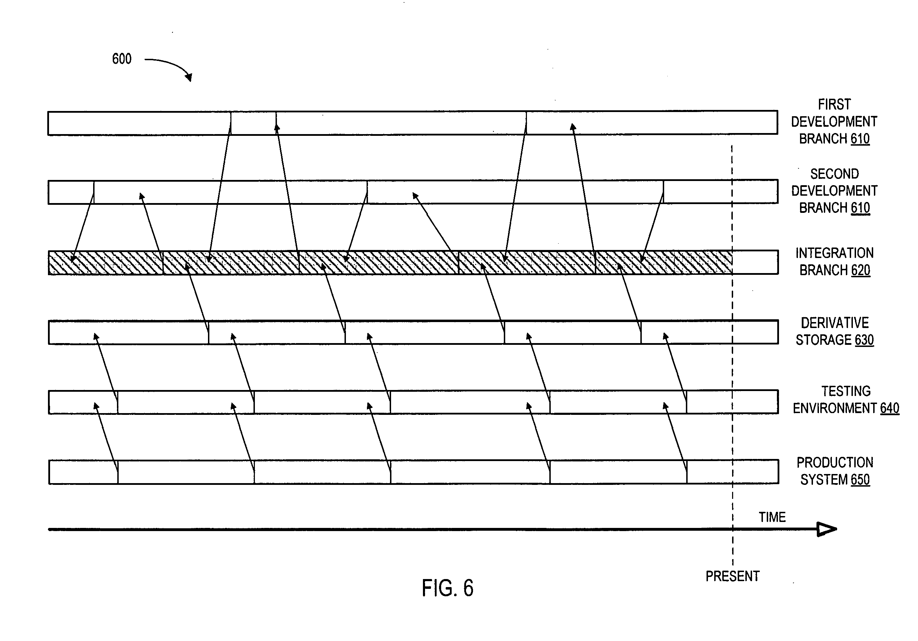

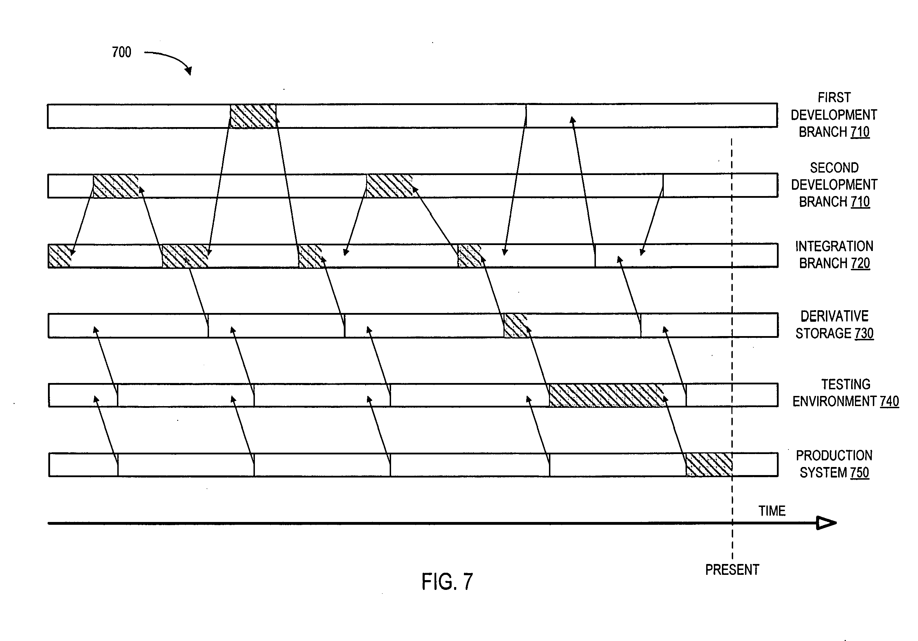

At 506, information about a sequence of stand snippets is automatically provided to a user, wherein the sequence may include stand snippets from both the first and second containers. Note that at least a portion of the sequence of stand snippets might be associated with a linear process history of the software product (including subsequent stand snippets from the same container as described with respect to FIG. 6). In other cases, at least a portion of the sequence of stand snippets may be associated with an indirect process history including subsequent stand snippets from different containers (as described with respect to FIG. 7).

According to some embodiments, the information provided at 508 is based on a selection received from a user. For example, the use might provide, via a graphical user interface, a selection associated with a stand snippet, in which case the information about the sequence of stand snippets may provided back to the user via the graphical user interface (in accordance with his or her selection). The user might select, for example, to view a sequence of stand snippets representing back-tracking or forward-tracking in time from an initial stand snippet. Moreover, the sequence might be provided up to a designated container or stand snippet and may be used to generating a history tree representing stand snippets from multiple second containers.

Refer again to the FIG. 2 which illustrated infrastructure elements, including two development branches 210, the derivate storage 230, the testing environment 240, and the production system 250 (e.g., a web server) modeled as containers. Transformations between these containers - whether they are transports of sources between branches or compilation or installation -create new stand snippets in the target containers.

A "linear" history of the current snapshot in the integration branch 220 may lead to the concatenation of stand snippets along the transitive direct predecessor chain of the current stand snippet. For example, FIG. 6 illustrates a linear process history of stand snippets associated with an integration branch 620 of a software production landscape in such a case.

In contrast, an "indirect" history may show another picture. Consider now, FIG. 7 which illustrates an indirect process history of stand snippets in a software production landscape according to some embodiments. In this case, the starting point is the current stand snippet in the container of the production system 750. The realization of the desired history may be performed by a transitive tracking of indirect successor relationships of stand snippets (e.g., back through the testing environment 740, the derivative storage 730, the integration branch 720 and eventually the development branches 710).

Besides the linear and indirect history, there may be other possible interpretations of a stand. An interpretation might, for example, control two things: (i) it may decide for a given stand snippet whether to track backward in time through the direct or the indirect predecessor and (ii) it might where the history of a stand starts in the past. Note that it might not always be desired to track back infinitely to the past. How such decisions are made may be specific to the implementation of the interpretation.

Input parameters associated with some embodiments described herein may include the stand snippet and container information. The names of them might be used by the interpretation (as well as additional attributes attached to the container or the stand snippet). Examples of further interpretations might include:

- Tracking the indirect history backward to a specially marked container. In the examples above, a history tracking beginning from the production systems ending at the testing environments might make sense when the details of the development phase are not of interest.
- Stand snippets might also be used for creating a history tree, not only a one-dimensional history. This might help answer a question, such as what are the latest versions from all the development branches that were included in a qualified product?
- Several parallel development branches might exchange changes through a common integration branch. A developer of one branch waiting for a specific change that is made in another branch may be interested in the latest interconnecting history between these two branches.

Note that some example may start with a current stand snippet and track backward into the past. According to some embodiments, it is possible to start with a non-current stand snippet (already in the past) and then continue to track backwards in time. According to other embodiments, it is also possible to start with a stand snippet in the past and to track forward in time. Note that an indirect history might not work forward in time since a stand snippet may have more than one indirect successors.

Note that processes in a software development landscape may operate on stand snippets. Some processes may implement transformations and other processes might not. For example:

- The branching within a version control system is a process that implements a special transformation, namely a transport.
- The compilation of a version within a stand snippet is a process that obviously is a transformation. The same might true for the installation of a derivate stand on a testing infrastructure.
- Bug fixing on a given source version may represent a process that is not a transformation.
- The passing of a testing cycle on a version that is installed on a testing environment may comprise a process that is not a transformation.

As modeled items, process steps might be able to refer to one or two stand snippets. The process of a transformation might, for example, always refers to the target stand snippet (the one being created by the transformation) and to the starting stand snippet (the indirect predecessor of the target stand snippet).

According to some embodiments, process steps can be structured such that they are built out of sub processes (e.g., the compilation of the product version might decompose into the compilation of single components or an entire test cycle might decompose into a single scenario or component tests). During execution of a process step, message may emerge which give information on the process step being run and/or provide data about the process history of a stand snippet. Such messages might be associated with, for example:

- the compilation status and the error message of a compiler,
- results of single test steps within the testing cycle (e.g., indicating that the step was successful or erroneous with a problem description), and
- the fixing of a source stand snippet (with a description of the correction that was applied).

According to some embodiments, problems associated with process tracking that can arise when operating an infrastructure landscape for software development may be addressed using containers as a universal description of infrastructure elements that serve as physical access to versions of the software product. Moreover, problems may further be addressed using "stand snippets" as the sections of the process history (which may be restricted to a single container). Note that a stand may also be composed such that it describes a process history across containers. Such containers and stands may thus be used to help a user monitor and track production processes.

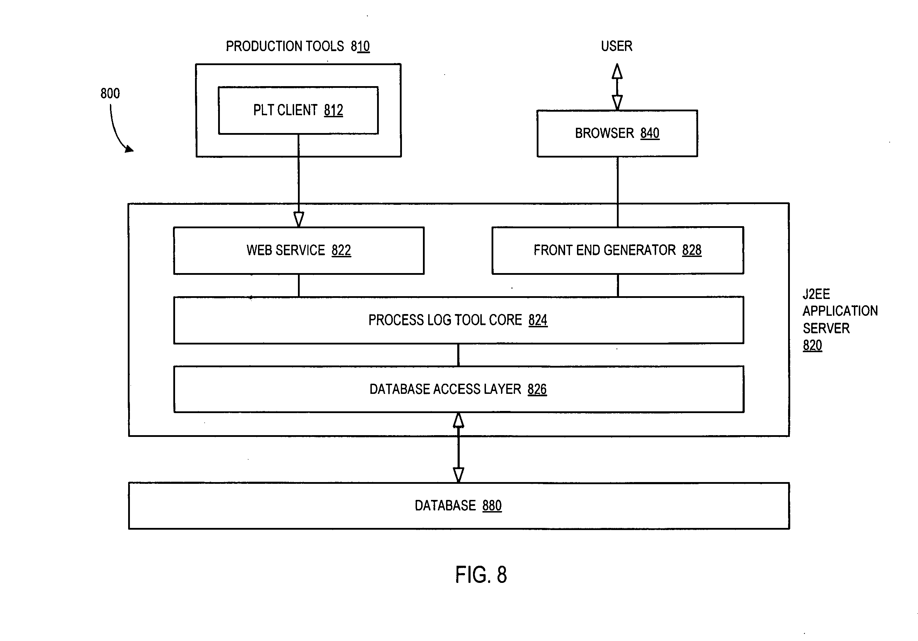

For example, FIG. 8 is a block diagram of a process log tool architecture 800 according to some embodiments. The architecture 800 includes production tools 810 (including a process log tool client 812) that provide information to a J2EE application server 820 via a web service 822. The web service 822 communicates with a process log tool core 824, which in turn can access a database 830 via a database access layer 826. A user may access a browser 840 to communicate with the application server 820. In particular, the server 820 exchanges information from the browser 840 via a front end generator 828.

Note that an infrastructure landscape that is used for the production of a software application may be relatively inhomogeneous (e.g., for historical reasons). For example, a multitude of different tools may be applied for executing single process steps in the whole production process chain. In this case, the application server 820 may help ensure a process recording within such a non-homogenous tool landscape. Thus, all tools involved in the production landscape may be able to send process information to that application server 820 using an API.

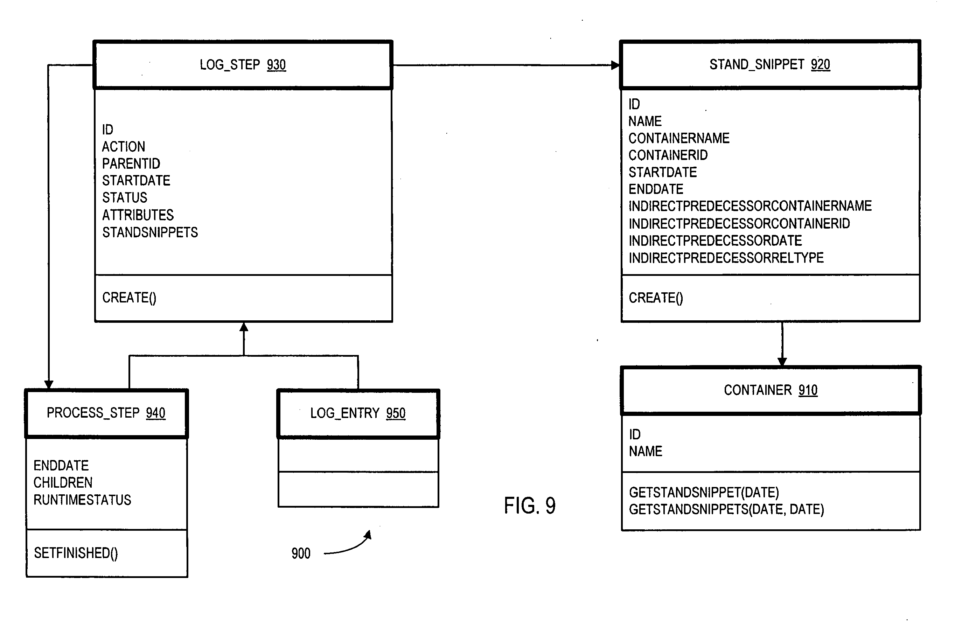

A data model 900 that might be used by the application server 820 is illustrated in FIG. 9. In the class diagram, getter and setter methods are omitted for clarity. The model 900 includes a container element 910, a stand snippet element 920, a log step element 930, a process step element 940, and a log entry element 950

According to some embodiments, all objects in a database may be identified by a Globally Unique Identifier (GUID). Moreover, a central object is the stand snippet (class StandSnippet) that is assigned to a container. The identification of a container within a stand snippet might be done, for example, either by providing its GUID or by name. The latter is unique in the overall set of containers. That has the advantage to be able to work with meaningful container names that correspond, for example, to branch names in a version control system.

A stand snippet object 920 may have a central method, namely create(), that persists the object attributes set by setter methods. The container 910 to which the stand snippet is 920 associated can be give by GUID (containerId) or by its name (containerName). If the container 910 is not yet known to the database, it may be automatically created within the create() method of the stand snippet 920.

Synchronously with the creation of a new stand snippet 920, its attribute StartDate may be set to the current time. The attribute endDate of the former current stand snippet 920 in the container 910 is set to the same date. By that, the role of being the current stand snippet 920 may also switch from the former stand snippet to the newly created one.

The indirect predecessor of the stand snippet is given by the indirect predecessor container (indirectPredecessorContainerID or indirectPredecessorContainerName) and the reference time (indirectPredecessorTime). The type of the underlying transformation (it may be, for example, an integration step within the version control system or a compilation) may be visible through the attribute indirectPredecessorRelType. Note that the indirect predecessor data are optional as a whole. That means, the stand snippet 920 may have no indirect predecessor.

Log entries 950 (class LogEntry) and process steps 940 (class ProcessStep) inherit form a common superclass LogStep. The main features are common to log entries 950 and process steps 940: the create() persists the data to the database. The attribute action contains a textual description of the process or log entry. This may give the user of the process log tool an idea of the process step 940 or the log entry 950. More detailed information that such an object shall provide is specific to the situation. Therefore, a generic vector attribute may be provided that is able to hold arbitrary parameter-value pairs. In this way, every production tool that creates a process step 940 or a log entry 950 in the process log tool is able to provide specific data as appropriate.

According to some embodiments, log entries 940 and process steps 950 are always associated to one or more stand snippets 920. The vector standSnippets stores a references to those. In addition, any log entry 940 and any process step 950 may be a child or a higher-level process step 940. The attribute parentId references to the parent process step 940 of by its GUID. Vice versa, a process step 940 may be able to inform about its child process steps 940 and log entries 950.

Finally, any log entry 950 and any process step 940 has a creation date startDate and a status that reports about the execution success within the notifying production tool. Possible values might include success, warning, error, and/or information. Note that the class log entry 950 may be similar to the class log step 930.

The class process step 940 in addition has its own attribute (runtimeStatus). In contrast to the log entry 950 that represents a temporally punctual event, the process step 940 has a temporal expansion due to the time that is required for process execution on the production tool side. During the execution of the process step 940, the value of the attribute runtimeStatus may have the value of "running" and after the process step 940 termination the value "finished." The termination of the process step 940 is triggered by the call of a method setFinished. This is the only case when an already created object may be altered. The process step 940 that needs to be finished might be, for example, identified by its GUID.

Messages and process steps may, according to some embodiments, be derived from a common super class named process message. This is due to the essential property common to both, namely the ability to be booked to one or two stand snippets. The property of process steps to act as bracket around messages or sub process steps is realized by an optional attribute of the class process message that contains a reference to the parent process step.

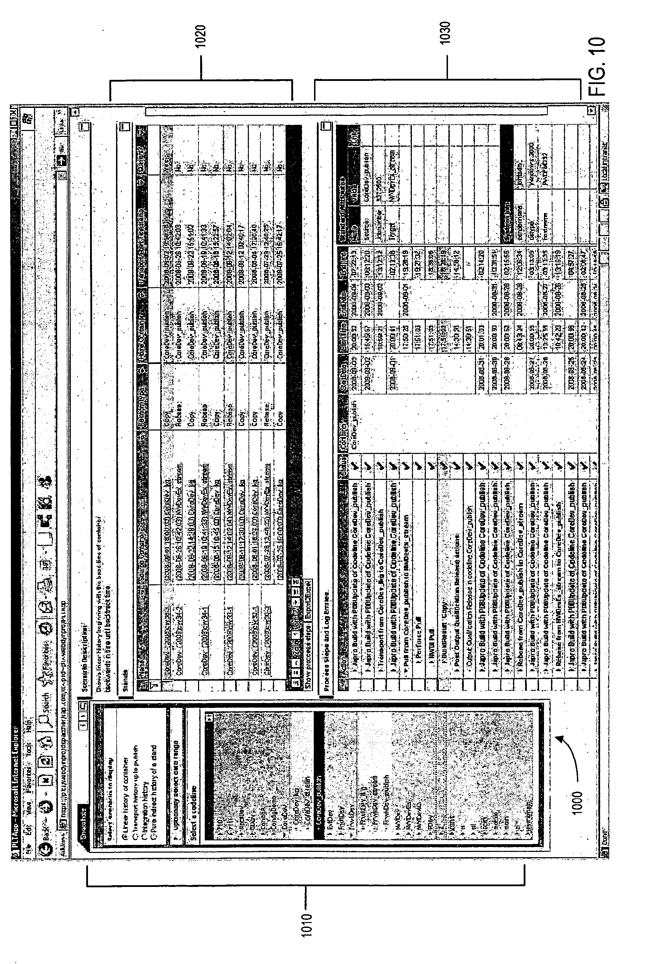

According to some embodiments, an end user desiring information about process history may log on to an application using a Graphical User Interface (GUI) display 1000 illustrated in FIG. 10.

In particular, a user selection area 1010 offers a choice of different stand interpretations (named "scenario" on the user interface). The user chooses the interpretation that is needed for answering his process related question. For example, he or she may choose to collect all containers that, through transformations, transitively are connected to the container the inquiry is addressed to. According to some embodiments, the server application is designed to be able to support other scenarios by just plugging in their implementation.

The user may choose the entry container in the selection area 1010. As containers, branches in the version control system, derivate storages, test systems and other infrastructural elements are listed. Semantically related containers (e.g., a branch on the version control system and the corresponding derivate storage) may be grouped by naming convention or via attribution of the containers. According to some embodiments, the selection area 1010 can further be used to select a scenario to display, including a linear history of a container, a transport history of a container, an integration history, a pure indirect history of a stand, an optionally selected date range, and/or a codeline.

After having chosen the interpretation and the entry container, the history of stand snippets is calculated. The stand information area 1020 on the upper right-hand side shows stand snippets beginning on the top with the most current one in chronologically reverse order to the bottom. The displayed information of the stand snippet contains the name of the container (column "Home Container") that hosts the stand snippet, and the name of the container hosting the indirect predecessor together with the reference time (column "Source Container"). The column "Relation Type" reports on the type of transformation that caused the creation of the stand snippet. The column "Start Timestamp" tells the start time of the stand snippet. Finally, a stand snippet can get a freely chosen name that is displayed in the first column. Note that the stand information area 1020 might display a name, a source container name or identifier, a relation type, a home container name or identifier, a transport/start timestamp, and/or an indication of whether or not the information is current.

A process step and/or log entry area 1030 in the lower half of the right-hand side of the display 1000 provides the process history of the stand generated by the sequence of stand snippets shown above. Process steps are displayed with start and end date. If a process step is still in execution, the entry "Running" may be shown. According to some embodiments, process steps are organized hierarchically, and they can be expanded on the front end such that sub process steps become visible. Additionally, every process step may carry an execution status which notifies on possible problems during process execution. Some information that might be displayed in the process step and/or log entry area 1030 includes action information, status, a container name, a start date and time, an end date and time, attribute information, system information, and/or build result copy information.

Thus, embodiments may improve the ability to maintain, track, and distribute different versions throughout a software production landscape. Moreover, one or more tools may be provided for a user that facilitate these abilities in an efficient and convenient manner.

The several embodiments described herein are solely for the purpose of illustration. Persons skilled in the art will recognize from this description other embodiments may be practiced with modifications and alterations limited only by the claims.

**Claims**

1. A method associated with a software production landscape, comprising:

    associating a first container, representing a first uniquely addressable physical location in the software production landscape, with a first series of stand snippets related to a software product;
    associating a second container, representing a second uniquely addressable physical location in the software production landscape, with a second series of stand snippets related to the software product; and
    automatically providing, to a user, information about a sequence of stand snippets, wherein the sequence may include stand snippets from both the first and second containers.

2. The method of claim 1, wherein at least a portion of the sequence of stand snippets is associated with a linear process history of the software product including subsequent stand snippets from the same container.

3. The method of claim 1 or 2, wherein at least a portion of the sequence of stand snippets is associated with an indirect process history including subsequent stand snippets from different containers.

4. The method of any one of the preceding claims, wherein each stand snippet is associated with a time interval.

5. The method of claim 4, wherein the time interval for a current stand snippet includes a start time; and/or wherein the time interval for a non-current stand snippet includes a start time and an end time.

6. The method of any one of the preceding claims, wherein the first container is associated with a source version of the software product and the second container is associated with an executable derivative version of the software product built from the source version.

7. The method of claim 6, wherein the first container comprises a directory within a software configuration management tool that hosts snapshots of the software product.

8. The method of any one of the preceding claims, wherein the sequence of stand snippets represents one of: (i) back-tracking in time from an initial stand snippet or (ii) forward-tracking in time from an initial stand snippet.

9. The method of any one of the preceding claims, wherein the sequence of stand snippets is provided up to one of (i) a designated container or (ii) a designated stand snippet.

10. The method of any one of the preceding claims, further comprising:

    generating a history tree representing stand snippets from both the first and second containers.

11. The method of any one of the preceding claims, further comprising:

    receiving from a user, via a graphical user interface, a selection associated with a stand snippet, wherein the information about the sequence of stand snippets is provided to the user via the graphical user interface.

12. The medium of any one of the preceding claims, wherein each stand snippet is associated with at least one of: (i) a time interval, (ii) a current stand snippet, (iii) a start time, (iv) a non-current stand snippet, or (v) an end time.

13. An apparatus, comprising:

    an integration branch to establish a source version of a software product, wherein a first container, representing a first uniquely addressable physical location in a software production landscape, is associated with the source version and a first series of stand snippets related to a software product;
    a derivative storage element to receive an executable derivative version of the software product built from the source version, wherein a second container, representing a second uniquely addressable physical location in the software production landscape, is associated with the executable derivative version and a second series of stand snippets related to a software product; and
    an application server to automatically provide, to a user, information about a sequence of stand snippets, wherein the sequence may include stand snippets from both the first and second containers.

14. The apparatus of claim 13, further comprising a process log tool core to facilitate an exchange of information with the user.

15. A computer-readable medium storing processor-executable process steps that, when executed by a processor, perform a method according to any one of claims 1 to 12.

100

INTEGRATION                    INTEGRATION

| FIRST DEVELOPMENT BRANCH 110 | ← INTEGRATION / COPY → | INTEGRATION BRANCH 120 | → INTEGRATION / ← COPY | SECOND DEVELOPMENT BRANCH 110 |

COMPILATION

DERIVATIVE STORAGE 130

INSTALLATION

TESTING ENVIRONMENT 140

COPY

PRODUCTION SYSTEM 150

FIG. 1

FIG. 2

ESTABLISH A SOURCE VERSION
OF A SOFTWARE PRODUCT

302

ASSOCIATE A FIRST CONTAINER, REPRESENTING A
FIRST UNIQUELY ADDRESSABLE PHYSICAL LOCATION,
WITH THE SOURCE VERSION

304

BUILD AN EXECUTABLE DERIVATIVE VERSION OF THE
SOFTWARE PRODUCT FROM THE SOURCE VERSION

306

ASSOCIATE A SECOND CONTAINER, REPRESENTING A
SECOND UNIQUELY ADDRESSABLE PHYSICAL LOCATION,
WITH THE EXECUTABLE DERIVATIVE VERSION

308

AUTOMATICALLY PROVIDE, TO A USER, SOFTWARE
CONFIGURATION INFORMATION BASED AT LEAST IN
PART ON A RELATIONSHIP BETWEEN THE FIRST AND
SECOND CONTAINERS

310

FIG. 3

400

STAND
SNIPPET A2

STAND SNIPPET A1                 STAND SNIPPET A3

CONTAINER
A 410

INDIRECT
SUCCESSOR
RELATIONSHIP

INDIRECT
SUCCESSOR
RELATIONSHIP

STAND
SNIPPET B2

STAND SNIPPET B1                 STAND SNIPPET B3

CONTAINER
B 420

TIME

START B1          START B2      START B3          PRESENT
                  (END B1)      (END B2)

FIG. 4

ASSOCIATE A FIRST CONTAINER, REPRESENTING A
FIRST UNIQUELY ADDRESSABLE PHYSICAL LOCATION,
WITH FIRST SERIES OF STAND SNIPPETS RELATED TO
SOFTWARE PRODUCT                    502

ASSOCIATE SECOND CONTAINER, REPRESENTING A
SECOND UNIQUELY ADDRESSABLE PHYSICAL LOCATION,
WITH SECOND SERIES OF STAND SNIPPETS RELATED TO
SOFTWARE PRODUCT                    504

PROVIDE TO USER INFORMATION ABOUT A SEQUENCE
OF STAND SNIPPETS INCLUDING SNIPPETS FROM BOTH
CONTAINERS                    506

FIG. 5

FIG. 6

700

FIRST
DEVELOPMENT
BRANCH 710

SECOND
DEVELOPMENT
BRANCH 710

INTEGRATION
BRANCH 720

DERIVATIVE
STORAGE 730

TESTING
ENVIRONMENT 740

PRODUCTION
SYSTEM 750

TIME

PRESENT

FIG. 7

EP 2 196 901 A1

PRODUCTION TOOLS 810

USER

800

PLT CLIENT 812

BROWSER 840

WEB SERVICE 822

FRONT END GENERATOR 828

J2EE
APPLICATION
SERVER
820

PROCESS LOG TOOL CORE 824

DATABASE ACCESS LAYER 826

DATABASE 880

FIG. 8

EP 2 196 901 A1

EP 2 196 901 A1

```
┌─────────────────────────────────────┐          ┌─────────────────────────────────────────────────┐
│           LOG_STEP 930               │─────────▶│              STAND_SNIPPET 920                    │
├─────────────────────────────────────┤          ├─────────────────────────────────────────────────┤
│                                      │          │  ID                                               │
│  ID                                  │          │  NAME                                             │
│  ACTION                              │          │  CONTAINERNAME                                    │
│  PARENTID                            │          │  CONTAINERID                                      │
│  STARTDATE                           │          │  STARTDATE                                        │
│  STATUS                              │          │  ENDDATE                                          │
│  ATTRIBUTES                          │          │  INDIRECTPREDECESSORCONTAINERNAME                 │
│  STANDSNIPPETS                       │          │  INDIRECTPREDECESSORCONTAINERID                   │
│                                      │          │  INDIRECTPREDECESSORDATE                          │
│                                      │          │  INDIRECTPREDECESSORRELTYPE                       │
├─────────────────────────────────────┤          ├─────────────────────────────────────────────────┤
│  CREATE()                            │          │  CREATE()                                         │
└─────────────────────────────────────┘          └─────────────────────────────────────────────────┘

┌───────────────────────────┐   ┌───────────────────────────┐          ┌─────────────────────────────────────────┐
│    PROCESS_STEP 940        │   │      LOG_ENTRY 950         │          │            CONTAINER 910                 │
├───────────────────────────┤   ├───────────────────────────┤          ├─────────────────────────────────────────┤
│  ENDDATE                   │   │                            │          │  ID                                     │
│  CHILDREN                  │   │                            │          │  NAME                                   │
│  RUNTIMESTATUS             │   ├───────────────────────────┤          ├─────────────────────────────────────────┤
├───────────────────────────┤   └───────────────────────────┘          │  GETSTANDSNIPPET(DATE)                  │
│  SETFINISHED()             │                                          │  GETSTANDSNIPPETS(DATE, DATE)           │
└───────────────────────────┘                                          └─────────────────────────────────────────┘
```

900

FIG. 9

FIG. 10

EP 2 196 901 A1

## EUROPEAN SEARCH REPORT

**Application Number**

EP 09 01 0453

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STROM D ET AL: "The importance of branching models in SCM" COMPUTER, IEEE SERVICE CENTER, LOS ALAMITOS, CA, US, vol. 35, no. 9, 1 September 2002 (2002-09-01), pages 31-38, XP011094772 ISSN: 0018-9162 * page 31, left-hand column, paragraph 1 - page 33, right-hand column, paragraph 1 * ----- | 1-15 | INV. G06F9/44 |

**TECHNICAL FIELDS SEARCHED (IPC)**

G06F
G06Q

The present search report has been drawn up for all claims

| Place of search | Date of completion of the search | Examiner |
|---|---|---|
| The Hague | 30 September 2009 | de Man, Ronald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)